# EUROPEAN PATENT APPLICATION

(11) **EP 1 260 385 A1**
(43) Date of publication of application: **27.11.2002**
(21) Application number: 01304611.5
(22) Date of filing: 24.05.2001
(51) Int. Cl.: B60C 9/00, B60C 9/08, B60C 9/20, D02G 3/48, D01F 6/30

(54) **Pneumatic tyre**

(71) Applicant: Sumitomo Rubber Industries Ltd., Kobe-shi, Hyogo-ken (JP)
(72) Inventor: Miyazaki, Shinichi, c/o Sumitomo Rubber Ind., Ltd., Kobe-shi, Hyogo-ken (JP); Toda, Osamu, c/o Sumitomo Rubber Industries, Ltd., Kobe-shi, Hyogo-ken (JP)
(74) Representative: Stewart, Charles Geoffrey

(57) **Abstract**

A pneumatic tyre comprises a carcass (6) extending between bead portions (4) through a tread portion (2) and sidewall portions (3), and a belt disposed radially outside the carcass (6) in the tread portion (2), wherein at least one of the carcass and the belt is reinforced with aliphatic polyketone fibre cords having specific characteristics.

## Description

The present invention relates to a pneumatic tyre reinforced with aliphatic polyketone fibre cords.

In general, a pneumatic tyre is provided with a carcass and a belt which are reinforced with carcass cords and belt cords, respectively. In the case of organic cords, for example, polyester, nylon, and aromatic polyamide are widely used as materials for such tyre reinforcing cords.

In order to improve high speed durability of passenger car radial tyres for example, usually the belt includes a breaker and a band disposed on the radially outer side of the breaker, and nylon cords are widely used as the band cords. Further, aromatic polyamide cords are also used. Aromatic polyamide cords are well known as being desirable to accomplish the purpose of the band (namely hooping) because of the excellent strength and high elastic modulus. In the case of a nylon cord band, when the tyre is made to withstand very high speed rotation, the amount of nylon cord is inevitably increased. As a result, tyre weight increases undesirably in a radially outermost part of the tyre. This problem may be solved by employing an aromatic polyamide cord band. In the case of aromatic polyamide cords, however, there is another problem which is the relatively high material cost. Further, aromatic polyamide cords are relatively weak in fatigue especially bending deformation.

On the other hand, polyester cords are widely employed in the carcass of a passenger car radial tyre for example. The polyester cords are poor in adhesion properties to rubber. Therefore, in order to obtain sufficient adhesion to the surrounding rubber, an epoxy dipping process and resorcinol-formaldehyde/latex dipping process are indispensable. These processes hinder improvements in tyre production efficiency and tyre production cost.

In laid-open Japanese patent application JP-A-9-324377, an aliphatic polyketone tyre cord is disclosed and the use in a carcass of a radial tyre is suggested, wherein the tyre cord is formed by twisting aliphatic polyketone filaments each having a tensile strength of not less than 10.0 g/d and an initial modulus of not less than 120 g/d, and the twist coefficient is in a range of from 1300 to 2200. As to characteristics of the finished cord, only the bending rigidity is disclosed which is in a range of from 10 to 80 g.

It is therefore, an object of the present invention to provide a pneumatic tyre, in which, by employing aliphatic polyketone cords having specific characteristics, the above-mentioned problems are solved.

According to the present invention, a pneumatic tyre comprises a carcass extending between bead portions through a tread portion and sidewall portions and a belt disposed radially outside the carcass in the tread portion, and at least one of the carcass and the belt is reinforced with aliphatic polyketone fibre cords.

In the case of the belt, it is preferable that the aliphatic polyketone fibre cords each have a tensile strength of not less than 9.8 g/d, a standard elongation of not more than 5.0%, and a dry heat shrinkage of not more than 6.0%, and the sum of the standard elongation and the dry heat shrinkage is not more than 9%, and the twist coefficient is in a range of from 1500 to 2000. The aliphatic polyketone fibre may be used for the breaker and the bandage.

In the case of the carcass, it is preferable that the aliphatic polyketone fibre carcass cords each have a tensile strength of not less than 15.0 g/d, a standard elongation of not more than 3.0%, and a dry heat shrinkage of not more than 3.0%, and the sum of the standard elongation and the dry heat shrinkage is not more than 5.5%.

### Definitions

The tensile strength of a cord is the load at rupture per denier which is measured according to the Japanese Industrial Standard L1017 - Testing Methods for Chemical Fibre Tyre Cords, 7. - Testing Method, 7.5 - Tensile Strength and Elongation Percentage, 7.5.1 - Test in Standard Condition.

Standard elongation is an elongation in percent under a load of 2.25 gram/denier which is measured according to the Japanese Industrial Standard L1017 - Testing Methods for Chemical Fibre Tyre Cords, 7. - Testing Method, 7.7 - Elongation Percentage in Constant Load, 7.7.1 - Test in Standard Condition.

Dry heat shrinkage is a shrinkage in percent after heating at 180 degrees C for 30 minutes which is measured according to the Japanese Industrial Standard L1017 - Testing Methods for Chemical Fibre Tyre Cords, 7. - Testing Method, 7.10 - Hot-dry Shrinkage Percentage, 7.10.2 - Method B (Hot-dry Shrinkage Percentage after Heating).

The twist coefficient is the product of the square root √D of the total denier number D of the cord multiplied by a cord twist number T (turns pre 10 cm) of the cord.

Embodiments of the present invention will now be described in detail in conjunction with the accompanying drawings in which:

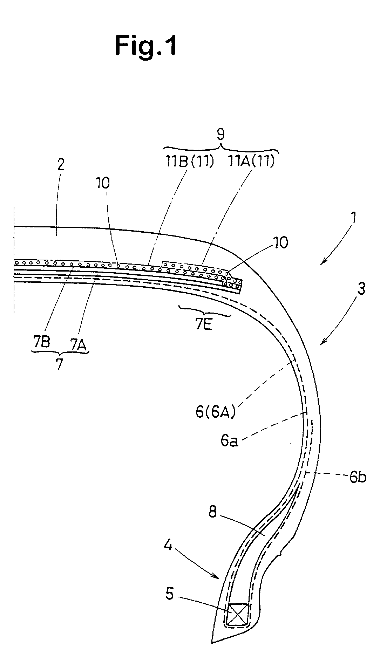

Fig.1 is a cross sectional view showing a radial tyre for passenger cars according to the present invention.

In Fig.1, a radial tyre 1 comprises a tread portion 2, a pair of sidewall portions 3, a pair of bead portions 4, a carcass 6 extending between the bead portions 4, and a belt disposed radially outside the carcass 6 in the tread portion 2.

The carcass 6 comprises at least one ply 6A of carcass cords arranged radially at an angle of from 75 to 90 degrees with respect to the tyre circumferential direction. The carcass ply 6A extends between the bead portions 4 through the tread portion 2 and sidewall portions 3 and is turned up around a bead core 5 in each bead portion 4 so as to form a pair of turned up portions 6b and a main portion 6a therebetween.

Each bead portion 4 is provided between the carcass ply main portion 6a and turned up portion 6b with a bead apex 8 made of a hard rubber compound tapering radially outwards from the bead core 5.

The belt can include a breaker 7 disposed on the radially outside of the carcass 6 and a band 9 disposed on the radially outside of the breaker 7. The major difference between the breaker and band is the cord angle.

The breaker 7 comprises at least two crossed plies 7A and 7B each made of high modulus breaker cords laid parallel with each other at an angle in the range of from 10 to 35 degrees with respect to the tyre circumferential direction. The breaker 7 extends across substantially the entire width of the tread portion 2.

The band 9 comprises at least one layer 11 of band cords 10 whose cord angle is less than 10 degrees, usually not more than 5 degrees, preferably substantially 0 degrees, with respect to the tyre circumferential direction. The band 9 extends at least in the edge portions 7E of the breaker 7 to prevent these portions from being lifted by centrifugal force during high-speed running. Thus, the band 9 may be (a) a full width band 11B extending across the entire width of the breaker, (b) an edge band 11A extending in the edge portions only, or (c) a combination of the edge band 11A and full width band 11B as shown in Fig.1. The layer 11 can be made by spirally winding a narrow tape of rubber in which several band cords 10, for example 5 to 15 cords, are embedded along the length thereof. Also the layer 11 can be made by winding one around the tyre a wider strip of rubberised cords 10.

According to the present invention, an aliphatic polyketone fibre cord is utilised as tyre reinforcing cords such as the carcass cords, belt (breaker, band) cords and the like.

The aliphatic polyketone fibre cord is formed by twisting aliphatic polyketone fibres together at a specified cord twist number T in turns/10 cm. As to the twist structure, a regular lay, Lang's lay, open lay, and compact lay or parallel lay may be utilised. In the following embodiments, a regular lay cord structure is employed. That is, the direction of twist in the strands is opposite to the direction of twist in the cord.

The aliphatic polyketone fibre is made of at least one kind of copolymer consisting of repeated linked units which are alternating carbon monoxide units and olefin units (A) as shown in the following structural formula:

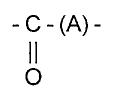

As the olefin units (A), ethylene is mainly used, but it is possible to include other olefins such as propylene, butene, pentene, etc. are included. The mole percentage of ethylene to the total of olefin is not less than 90 mol%, preferably not less than 94 mol%, more preferably 100 mol%. If less than 90 mol%, it is difficult to obtain the strength and tensile elastic modulus which are necessary for tyre reinforcing cord. That is, the aliphatic polyketone fibre is made of a copolymer of carbon monoxide and one kind of olefin (or ethylene) and optional copolymer(s) of carbon monoxide and two or more kinds of olefins. Preferably, the aliphatic polyketone has the following structure:

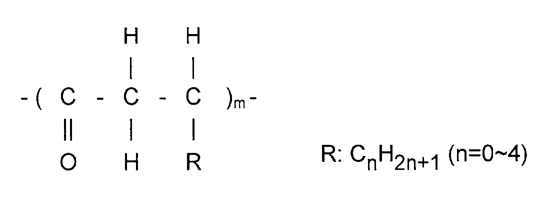

In this example, a copolymer of carbon monoxide and substantially 100% ethylene is used, namely, n=0.

In manufacturing the aliphatic polyketone fibres, it is preferable for environmental and economical aspects to use a melt spinning method.

### Embodiment 1

In this embodiment, an aliphatic polyketone fibre cord is used as the band cords 10.

The aliphatic polyketone fibre cord in the band has a twist coefficient N of from 1500 to 2000, a tensile strength of not less than 9.8 g/d, a standard elongation of not more than 5.0%, and the sum of the standard elongation and dry heat shrinkage is not more than 9%. The dry heat shrinkage is not more than 6.0%. Preferably, the total denier number D of the band cord 10 is in a range of from 2000 to 4500 deniers.

If the tensile strength is less than 9.8 g/d, it is necessary to increase the number of the cords in order to maintain the breaking strength of the tyre. Accordingly, it becomes difficult to provide a light-weight low-cost tyre.

If the standard elongation is more than 5.0%, and/or the dry heat shrinkage is more than 6.0%, and/or the sum of the standard elongation and dry heat shrinkage is more than 9%, then the band cords have a large elongation due to the internal heat build-up in the tread portion and the centrifugal force during high speed running. In other words, the hooping effect of the band becomes insufficient, and the high-speed durability is not improved.

If the twist coefficient N is less than 1500, the fatigue resistance and strength of the cord decreases are liable to decrease. If the twist coefficient N is more than 2000, the tensile elastic modulus decreases and the hooping effect of the band decreases and the high-speed durability is not improved.

As described above, a regular lay cord structure is used in this embodiment. However, a parallel lay cord structure may be employed in the aliphatic polyketone fibre band cord to further reduce the quantity and thereby to reduce the weight and cost. In this case, the twist coefficient N may be set in a range of from 150 to 750.

On the other hand, the breaker in this example is made of steel cords. But, high modulus organic fibre cords such as aromatic polyamide fibre cords, aromatic polyester fibre cords and the like, or the aliphatic polyketone fibre cords may be also used.

The carcass in this example is made of polyester fibre cords. However, other organic fibre cords, e.g. nylon, rayon, aromatic polyamide, aliphatic polyketone and the like, and further steel cords may be used according to the use, size, etc.

### Comparison test 1

Test tyres of size P165/70R13 having the structure shown in Fig.1 and specifications shown in Table 1 were made and tested for high-speed durability

### (1) High-speed durability test

Using a tyre test drum, the test tyre mounted on a standard wheel rim (size 5JX13), inflated to standard pressure of 280 kPa, and loaded with normal load of 437 kgf which is 80% of the maximum pressure which are specified by Japan Automobile Tyre Manufacturers Association was run at an ambient temperature of 25 plus/minus 5 degrees C. The running speed was increased every ten minutes in steps of 10 km/h from 170 km/h. The running was continued until any damage occurred and the running distance was measured. The results are indicated by an index based on Ref.A1 being 100, wherein the larger the index number, the better the high-speed durability.

**Table 1**

| Tyre | Ref.A1 | Ref.A2 | Ex.A1 |
|---|---|---|---|
| Band | | | |
| Cord | Aromatic polyamide | nylon 66 | aliphatic polyketone * |
| | 1500d/2 | 1500d/2 | 1500d/2 |
| Total denier D | 3000 | 3000 | 3000 |
| Twist T (turns/10cm) | 30 | 30 | 30 |
| Twist coefficient N | 1643 | 1643 | 1643 |
| Tensile strength (g/d) | 17.3 | 8 | 13.3 |
| Standard elongation (%) | 0.9 | 12.7 | 3.8 |
| Dry-heat shrinkage (%) | 0 | 5 | 1.8 |
| Sum (%) | 0.9 | 17.7 | 5.6 |
| Cord count/5cm | 30 | 49 | 40 |
| Material cost | high | low | low |

| Breaker | | | |
|---|---|---|---|
| Cord | steel | steel | steel |
| | 1X1X0.42 | 1X1X0.42 | 1X1X0.42 |
| No. of ply | 2 | 2 | 2 |
| Cord count/5cm | 40 | 40 | 40 |
| Cord angle (deg.) | -1 | -1 | -1 |

| Carcass | | | |
|---|---|---|---|
| Cord | polyester | polyester | polyester |
| | 1500d/2 | 1500d/2 | 1500d/2 |
| Cord count/5cm | 50 | 50 | 50 |
| No. of ply | 1 | 1 | 1 |
| Cord angle (deg.) | 90 | 90 | 90 |
| High-speed durability | 101 | 100 | 106 |

| | | | |
|---|---|---|---|
| *) a copolymer of ethylene and carbon monoxide (ethylene was almost 100 mol %) | | | |

From the test results, it was confirmed that, by using the aliphatic polyketone fibre cords in the band, the high-speed durability was improved more than with the aromatic polyamide fibre cord, without increasing the cost.

### Embodiment 2

In this embodiment, an aliphatic polyketone fibre cord is utilised as the carcass cords.

The aliphatic polyketone fibre cord in the carcass has a tensile strength of not less than 15.0 g/d, a standard elongation of not more than 3.0%, and a dry heat shrinkage of not more than 3.0%, and the sum of the standard elongation and dry heat shrinkage is not more than 5.5%. The total denier number D of the carcass cord is in a rage of from 2000 to 4500 deniers. The twist coefficient N of the carcass cord is in a range of from 1000 to 2500. The cord count of the carcass ply is in a range of from 30 to 50 /5 cm width.

By setting the tensile strength in the range of not less than 15.0 g/d, the strength of the carcass 6 is improved. Further, as the specific gravity is 1.24 which is less than the specific gravity (=1.38) of polyester, a corresponding weight reduction is possible. Weight reduction can be further achieved by decreasing the cord count of the carcass and/or the total denier number of the cord in comparison with the polyester cord, while maintaining the strength. And the fuel consumption is improved. If the tensile strength is less than 15.0 g/d, these advantageous effects can not be obtained.

By setting the standard elongation in the range of not more than 3.0%, the tyre rigidity is improved or maintained and the steering stability is improved. Further, a growth in the tyre diameter due to high speed rotation is controlled and the high-speed durability is improved.

If the dry heat shrinkage is more than 3.0%, or if the sum of the standard elongation and dry heat shrinkage is more than 5.5%, the tyre shrinks after the vulcanisation, and the tyre uniformity is disturbed. Therefore, in order to avoid this drawback, so called post cure inflation (PCI) is necessitated. That is, after the vulcanised mould is took out from the mould, it is necessary to inflate the tyre to a higher pressure than atmospheric pressure until the tyre gets cold to prevent the shrinkage of the carcass cords and the resultant deformation. Accordingly, the production efficiency decreases and production cost increases.

As the aliphatic polyketone fibre cord has a high strength and a high modulus, the cord count (30 to 50 /5 cm) can be decreased in comparison with the cord count (45 to 55 /5 cm) using polyester fibre cord. Thus, the tyre weight can be decreased. If the cord count is less than 30 /5 cm, the strength of the carcass 6 is lowered. If more than 50 /5 cm, the rubber between the cords becomes short, and adhesive failure between the cords and rubber is liable to occur.

If the twist coefficient N is less than 1000, the fatigue resistance and strength of the cord decreases are liable to decrease. If the twist coefficient N is more than 2500, the tensile elastic modulus decreases and the tyre rigidity decreases and the steering stability and high-speed durability can not be improved.

If the total denier number D is less than 2000 deniers, it is necessary to increase the cord count which decreases the production efficiency. If more than 4500 deniers, the resistance to external injure decreases and the tyre weight increases.

In this embodiment, in addition to the carcass, aliphatic polyketone fibre cords are employed in the belt. The belt in this example consists of the breaker 7, and at least one of the breaker plies 7A and 7B, for example the radially inner breaker ply 7A is made of aliphatic polyketone fibre cords but the radially outer breaker ply 7B is made of steel cords. From the point of view of puncture resistance, it may be preferable that the radially outermost ply is a steel cord ply rather than an aliphatic polyketone fibre cord ply.

The aliphatic polyketone fibre cord used in the breaker has a tensile strength of not less than 15.0 g/d, a standard elongation of not more than 3.0%, and a dry heat shrinkage of not more than 3.0%. The total denier number D is in a range of from 2000 to 4500 deniers. The twist coefficient N is in a range of from 1000 to 2500. The sum of the standard elongation and dry heat shrinkage is not more than 5.5%. In this example, a cord identical with the carcass cord is used in the breaker.

As the aliphatic polyketone fibre cords are used in both of the carcass and breaker, a remarkable weight reduction is possible. Further, a shearing stress between the carcass ply and breaker ply is mitigated to prevent breaker edge separation. The improvements in the high-speed durability, steering stability and ride comfort due to the use of the aliphatic polyketone fibre cords in the carcass may be further promoted.

### Comparison Test 2

Test tyres of size P165/70R13 having the structure shown in Fig.1 and specifications shown in Table 2 were made and tested as follows.
(1) High-speed durability test
Same as above.
(2) Steering stability and Ride comfort test
During running a 1600cc FF passenger car provided on all the four wheels with the test tyres, the steering stability and ride comfort were evaluated by the test driver into five ranks (Ref.B1=3) wherein the larger the rank number, the better the performance.

**Table 2**

| Tyre | Ref.B1 | Ex.B1 | Ex.B2 | Ex.B3 |
|---|---|---|---|---|
| Carcass | | | | |
| Cord | polyester | aliphatic polyketone * | aliphatic polyketone * | aliphatic polyketone * |
| | 1500d/2 | 1500d/2 | 1500d/2 | 1500d/2 |
| Total denier D | 3000 | 3000 | 3000 | 3000 |
| Twist coefficient N | 1643 | 1643 | 1643 | 1643 |
| Tensile strength (g/d) | 7.8 | 16.8 | 16.8 | 16.8 |
| Standard elongation (%) | 4.5 | 2 | 2 | 2 |
| Dry-heat shrinkage (%) | 3.5 | 1.5 | 1.5 | 1.5 |
| Elongation+Shrinkage (%) | 8 | 3.5 | 3.5 | 3.5 |
| Cord count (/5cm) | 50 | 40 | 40 | 40 |
| Number of ply | 1 | 1 | 1 | 1 |
| Cord angle (deg.) | 89 | 89 | 89 | 89 |

| Breaker | | | | |
|---|---|---|---|---|
| Outer ply | | | | |
| Cord | steel | Steel | Steel | steel |
| | 1X3X0.27 | 1X3X0.27 | 1X3X0.27 | 1X3X0.27 |
| Cord count (/5cm) | 40 | 40 | 40 | 40 |
| Cord angle (deg.) | 20 | 20 | 20 | 20 |

| Inner ply | | | | |
|---|---|---|---|---|
| Cord | steel | Steel | Steel | aliphatic polyketone * |
| | 1X3X0.27 | 1X3X0.27 | 1X3X0.27 | 1500d/2 |
| | | | | same as carcass |
| Core count (/5cm) | 40 | 40 | 40 | 40 |
| Cord angle (deg.) | -20 | -20 | -20 | -20 |
| Tyre weight difference (g) | 0 | -106 | -106 | -132 |
| Material cost** | C | B | B | A |
| High-speed durability | 100 | 105 | 106 | 104 |
| Steering stability | 3 | 3.4 | 3.4 | 3.3 |
| Ride comfort | 3 | 3.1 | 3.1 | 3.3 |
| Fuel consumption** | C | B | B | A |
| PCI*** | R | N | R | N |

| | | | | |
|---|---|---|---|---|
| *) a copolymer of ethylene and carbon monoxide (ethylene was almost 100 mol %) | | | | |
| **) good <- A, B, C -> poor | | | | |
| ***) Necessity of post cure inflation, R: necessary, N: not necessary | | | | |

It was confirmed from the test results that, by using the aliphatic polyketone fibre cord in the carcass, the high-speed durability, steering stability, ride comfort and the like were improved while achieving a weight reduction and a cost reduction.

## Claims

1. A pneumatic tyre comprising a carcass (6) extending between bead portions (4) through a tread portion (2) and sidewall portions (3), and a belt (7) disposed radially outside the carcass (6) in the tread portion (2), **characterised in that** at least one of the carcass (6) and the belt is reinforced with aliphatic polyketone fibre cords.

2. A pneumatic tyre according to claim 1, **characterised in that** the belt comprises a breaker (7) disposed on the radially outside of the carcass, and a band (10) disposed on the radially outside of the breaker, and the band (10) comprises the aliphatic polyketone fibre cords whose cord angles are not more than 5 degrees with respect to the tyre circumferential direction.

3. A pneumatic tyre according to claim 2, **characterised in that** the aliphatic polyketone fibre cords each have a tensile strength of not less than 9.8 g/d, a standard elongation of not more than 5.0%, and a dry heat shrinkage of not more than 6.0%, the sum of the standard elongation and the dry heat shrinkage is not more than 9%, and a twist coefficient N is in a range of from 1500 to 2000, where the twist coefficient N is the product (Tx√D) of the square root of total denier number D of the cord and the twist number T (turns/10 cm) of the cord.

4. A pneumatic tyre according to claim 1, **characterised in that** the carcass (6) comprises at least one ply of aliphatic polyketone fibre cords arranged radially at an angle of from 75 to 90 degrees with respect to the circumferential direction of the tyre, the aliphatic polyketone fibre carcass cords each have a tensile strength of not less than 15.0 g/d, a standard elongation of not more than 3.0%, a dry heat shrinkage of not more than 3.0%, and the sum of the standard elongation and the dry heat shrinkage is not more than 5.5%.

5. A pneumatic tyre according to claim 4, **characterised in that** the aliphatic polyketone fibre carcass cords each have a total denier number D in a range of from 2000 to 4500 deniers, and a twist coefficient N in a range of from 1000 to 2500, where the twist coefficient N is the product (Tx√D) of the square root of the total denier number D and the twist number T (turns/10 cm) of the cord.

6. A pneumatic tyre according to any of claims 1 to 5, **characterised in that** the belt comprises a breaker (7) comprising at least one ply of aliphatic polyketone fibre cords laid at an angle in a range of from 10 to 35 degrees with respect to the circumferential direction of the tyre.

7. A pneumatic tyre according to claim 6, **characterised in that** the aliphatic polyketone fibre cord used in the breaker (7) has a tensile strength of not less than 15.0 g/d, a standard elongation of not more than 3.0%, and a dry heat shrinkage of not more than 3.0%, the sum of the standard elongation and dry heat shrinkage is not more than 5.5%, the total denier number of the cord is in a range of from 2000 to 4500 deniers, and the twist coefficient is in a range of from 1000 to 2500.
